# FASCICULE DE BREVET EUROPEEN

(11) **EP 2 624 686 B1**
(45) Date de publication et mention de la délivrance du brevet: **15.03.2017**
(21) Numéro de dépôt: 11779778.7
(22) Date de dépôt: 03.10.2011
(51) Int. Cl.: A01C 23/00, A01M 7/00

(54) **ENGIN AGRICOLE DE PULVÉRISATION ET PROCÉDÉ DE PULVÉRISATION D'UN LIQUIDE PHYTOSANITAIRE SUR UN TERRAIN CULTIVÉ AU MOYEN D'UN TEL ENGIN**
LANDWIRTSCHAFTLICHE SPRÜHMASCHINE UND VERFAHREN ZUM SPRÜHEN EINER PHYTOSANITÄREN FLÜSSIGKEIT AUF EINEN MIT EINER DERARTIGEN MASCHINE KULTIVIERTEN BODEN
AGRICULTURAL SPRAYING MACHINE AND METHOD FOR SPRAYING A PHYTOSANITARY LIQUID OVER CULTIVATED LAND BY MEANS OF SUCH A MACHINE

(30) Priorité: 05.10.2010 FR 1058072
(43) Date de publication de la demande: 14.08.2013
(73) Titulaire: EXEL INDUSTRIES, 51200 Epernay (FR)
(72) Inventeur: BALLU, Patrick, F-51100 Reims (FR)
(74) Mandataire: Lavoix
(86) Numéro de dépôt international: PCT/FR2011/052296
(87) Numéro de publication internationale: WO 2012/045964

(56) Documents cités:
- EP-A1- 1 444 894
- WO-A2-2011/073751
- DE-A1- 4 140 254
- US-A- 5 348 226

## Description

La présente invention concerne un engin agricole de pulvérisation ainsi qu'un procédé de pulvérisation d'un liquide phytosanitaire sur un terrain cultivé au moyen d'un tel engin.

Il est connu d'utiliser un engin agricole pourvu d'une rampe de pulvérisation pour répandre un liquide phytosanitaire sur une végétation plantée dans un terrain pouvant comporter des irrégularités, par exemple des trous ou des bosses, et dont la pente peut varier.

Pour que la répartition du liquide phytosanitaire sur la végétation soit satisfaisante, la rampe ne doit pas être trop éloignée de la végétation, de manière à éviter la dispersion des gouttes de liquide phytosanitaire dans l'atmosphère. Par ailleurs, si la rampe est trop proche du terrain, elle risque d'entrer en collision avec le terrain et/ou la végétation, ce qui aurait pour effet d'endommager la rampe de pulvérisation et pourrait boucher des buses de pulvérisation de la rampe.

De manière classique, un engin agricole de pulvérisation est pourvu d'un vérin pour incliner sa rampe de pulvérisation par rapport à son châssis, ce qui permet à la rampe de s'adapter aux variations de la géométrie du terrain. L'utilisateur, lorsqu'il pulvérise le liquide phytosanitaire sur la végétation, commande manuellement le dévers de la rampe de pulvérisation, c'est-à-dire son inclinaison, pour qu'elle ne soit ni trop proche, ni trop éloignée de la végétation et du terrain.

Cependant, lorsque l'utilisateur pulvérise le liquide phytosanitaire sur la végétation, la commande manuelle de l'inclinaison de la rampe est peu aisée car l'utilisateur pilote simultanément l'engin, tel qu'un tracteur, le long d'une trajectoire. De plus, l'utilisateur cherche toujours à aller le plus vite possible et il ne peut pas trop diminuer la vitesse de l'engin. Lorsque la rampe comprend plusieurs bras articulés, le pilotage est encore moins aisé car l'utilisateur commande manuellement la géométrie variable de la rampe, c'est-à-dire l'inclinaison des différents bras.

Selon un autre aspect, du fait de l'inertie de la rampe qui reste pendulaire pour ne pas répercuter les irrégularités du terrain sous les roues de l'engin, chaque modification du dévers de la rampe, le cas échéant de sa géométrie variable, entraine un déplacement du centre de gravité et un basculement de la rampe au-delà de l'angle corrigé manuellement par l'utilisateur. Ceci entraine des oscillations, semblables à celles d'un pendule, qui peuvent planter une des extrémités de la rampe dans le terrain. Ces oscillations peuvent, en outre, compliquer et ralentir le juste réglage de la correction de dévers et/ou de géométrie variable de la rampe. Cet inconvénient est également présent dans les systèmes connus de correction de dévers automatique, tel que celui divulgué par le document DE-A1-41 40 254.

Par ailleurs, lorsque l'utilisateur commande manuellement l'inclinaison de la rampe lors de la pulvérisation, la rampe et sa suspension sont instables car elles subissent les effets de l'inertie, ce qui n'est pas satisfaisant. Ces effets sont accentués par la vitesse de l'engin. Le document WO-A-2011/073751 est un document intermédiaire selon l'art. 54(3) CBE. Il décrit un dispositif de pilotage totalement automatique de l'inclinaison et de la hauteur de la rampe sur base d'informations stockées. Par contre, le dispositif n'est pas conçu pour un pilotage totalement manuel de l'engin de pulvérisation, ni pour stocker les informations (du récepteur, des capteurs, des éléments de mesure) lors du pilotage manuel.

C'est à ces inconvénients qu'entend plus particulièrement remédier l'invention en proposant un engin agricole de pulvérisation et un procédé de pulvérisation permettant une pulvérisation aisée et optimisée, et qui limite les risques de collision entre la rampe et le terrain.

A cet effet, l'invention a pour objet un engin agricole de pulvérisation (revendication 1) d'un liquide phytosanitaire sur un terrain cultivé, comprenant
- des moyens de déplacement de l'engin sur la surface du terrain,
- une rampe de pulvérisation du liquide phytosanitaire comprenant au moins un bras,
- pour le ou au moins un des bras de la rampe, un organe d'inclinaison du bras par rapport à un châssis de l'engin agricole,
- un organe de montée/descente de la rampe selon un premier axe fixe par rapport au châssis de l'engin et vertical, voire sensiblement vertical lorsque l'engin repose sur une surface plane horizontale ou par rapport à un deuxième axe de même direction que la pesanteur terrestre,
- un système manuel de commande de chaque organe d'inclinaison et de l'organe de montée/descente,
- un récepteur apte à communiquer avec un système de géolocalisation et
- une unité de commande,
le ou au moins un des bras de la rampe étant pourvu d'au moins un capteur, chaque capteur mesurant une distance entre la surface du terrain et ce capteur ou, le cas échéant, entre une végétation plantée dans le terrain et ce capteur. Un habitacle de l'engin (1) est configuré de sorte qu'un utilisateur peut piloter simultanément les moyens (10, 11) de déplacement de l'engin (1) et le système manuel de commande (38, 38a, 38b, 38c). Le ou au moins un des bras de la rampe est pourvu d'un élément de mesure d'une donnée relative à l'inclinaison, dans le plan perpendiculaire à la direction d'avance, d'un axe longitudinal de ce bras.

L'unité de commande est :
- reliée à chaque capteur, au récepteur et à l'élément de mesure,
- pourvue d'une mémoire de stockage d'informations fournies, lorsque l'utilisateur manoeuvre le système manuel de commande, par chaque capteur, par le récepteur et par chaque élément de mesure, et
- apte à piloter chaque organe d'inclinaison et l'organe de montée/descente en fonction des informations stockées dans la mémoire.

Grâce à l'invention, les informations recueillies par le récepteur, les capteurs et l'élément de mesure permettent à la rampe, lors de la pulvérisation, de s'adapter automatiquement aux variations de la géométrie du terrain et de se positionner de manière optimale pour une pulvérisation satisfaisante.

Selon des aspects avantageux mais non obligatoires de l'invention, un tel engin agricole peut incorporer une ou plusieurs des caractéristiques suivantes, prises dans toute combinaison techniquement admissible :
- Au moins un organe d'inclinaison et/ou l'organe de montée/descente comprend un vérin hydraulique ou électrique.
- Le ou au moins un des bras de la rampe est pourvu de deux capteurs.
- L'organe de montée/descente et/ou le ou au moins un organe d'inclinaison sont pourvus d'un système de mesure d'une grandeur correspondant à une configuration de cet ou de ces organes.

L'invention a également pour objet un premier procédé (revendication 5) de pulvérisation d'un liquide phytosanitaire sur une culture plantée sur un terrain au moyen d'un engin selon l'invention, comprenant :
- une étape initiale a), dans laquelle, avant la pulvérisation, l'utilisateur entre dans l'unité de commande la valeur d'une distance minimale et la valeur d'une distance maximale supérieure à la distance minimale,
- une étape préalable b) dans laquelle,
- l'engin parcourt la surface du terrain, à une première vitesse, selon une trajectoire déterminée, de sorte que la rampe balaye toute la surface, l'utilisateur manoeuvrant, sur toute la trajectoire, le système manuel de commande de chaque organe d'inclinaison et/ou le système manuel de commande de l'organe de montée/descente, de sorte que la distance entre chaque capteur et la surface ou la végétation est comprise entre la distance maximale et la distance minimale,
- l'unité de commande enregistre dans sa mémoire, pour des positions échantillonnées de l'engin le long de la trajectoire, d'une part, la distance entre chaque capteur et le terrain ou la végétation et, d'autre part, au moins une donnée relative à l'inclinaison de chaque bras,
- une étape de pulvérisation c), postérieure à l'étape b), dans laquelle, pendant la pulvérisation :
   - l'engin parcourt la surface, à une deuxième vitesse supérieure ou égale à la première vitesse, selon la trajectoire empruntée pendant l'étape préalable b) et
   - pour chaque position échantillonnée à l'étape préalable b) et en fonction des données stockées dans la mémoire, l'unité de commande pilote, de façon anticipée, l'organe de montée/descente et chaque organe d'inclinaison, de sorte que la distance entre chaque capteur et le terrain ou la végétation est comprise entre la distance maximale et la distance minimale.

Selon des aspects avantageux mais non obligatoires de l'invention, un tel procédé peut incorporer une ou plusieurs des caractéristiques suivantes, prises dans toute combinaison techniquement admissible :
- Lors de l'étape de pulvérisation c), l'unité de commande pilote de manière anticipée chaque organe d'inclinaison de sorte que, pour chaque position échantillonnée à l'étape préalable b), l'inclinaison de chaque bras est semblable à l'inclinaison de chaque bras définie par l'utilisateur lors de l'étape préalable b).
- Lors de l'étape préalable b), l'unité de commande enregistre dans sa mémoire, pour des positions échantillonnées de l'engin le long de la trajectoire, au moins une grandeur correspondant à une configuration de l'organe de montée/descente et/ou d'au moins un ou de l'organe d'inclinaison, et lors de l'étape de pulvérisation c), pour chaque position échantillonnée à l'étape préalable b), l'unité de commande pilote automatiquement et de façon anticipée l'organe de montée/descente et/ou au moins un ou l'organe d'inclinaison de sorte que chaque grandeur est égale aux grandeurs enregistrées lors de l'étape préalable b).
- Lors de l'étape initiale a), l'utilisateur entre dans l'unité de commande la valeur d'une distance optimale comprise entre la distance minimale et la distance maximale et, lors de l'étape de pulvérisation c), l'unité de commande pilote automatiquement et de manière anticipée chaque organe d'inclinaison et l'organe de montée/descente de sorte que, pour chaque position échantillonnée à l'étape préalable b), la distance mesurée par chaque capteur est sensiblement égale à la distance optimale.
- Lors de l'étape initiale a), l'utilisateur entre dans l'unité de commande la valeur d'une distance optimale comprise entre la distance minimale et la distance maximale et, lors de l'étape préalable b), dès que la distance mesurée par au moins un capteur est inférieure à la distance minimale, l'unité de commande pilote automatiquement et de façon prioritaire l'organe de montée/descente pour éloigner la rampe de la surface jusqu'à ce que la distance mesurée par chaque capteur soit supérieure ou égale à la distance optimale.
- Lors de l'étape initiale a), l'utilisateur entre dans l'unité de commande la valeur d'une distance optimale comprise entre la distance minimale et la distance maximale et, lors de l'étape préalable b), l'unité de commande pilote automatiquement l'organe de montée/descente et/ou le ou au moins un organe d'inclinaison de sorte que la distance mesurée par chaque capteur est sensiblement égale à la distance optimale, l'utilisateur manoeuvrant le système manuel de commande de l'organe de montée/descente et/ou le système manuel de commande de chaque organe d'inclinaison pour corriger le pilotage de l'unité de commande.

L'invention à également pour objet un second procédé (revendication 11) de pulvérisation d'un liquide phytosanitaire sur une végétation plantée sur un terrain au moyen d'un engin selon l'invention. Ce second procédé comprend:
- une étape initiale a2), dans laquelle, avant la pulvérisation, l'utilisateur entre dans l'unité de commande la valeur d'une distance minimale et la valeur d'une distance optimale supérieure à la distance minimale,
- une étape préalable b2), postérieure à l'étape initiale a2), dans laquelle,
   - l'engin parcourt la surface du terrain, à une première vitesse, selon une trajectoire déterminée, de sorte que la rampe balaye toute la surface,
   - dès que la distance mesurée par au moins un capteur est inférieure à la distance minimale entrée lors de l'étape initiale a2), l'unité de commande pilote l'organe de montée/descente, jusqu'à ce que la distance mesurée par ce ou ces capteurs soit égale à la distance optimale,
   - l'utilisateur manoeuvre le système manuel de commande de chaque organe d'inclinaison de sorte que la distance mesurée par chaque capteur est globalement égale à la distance optimale,
   - à chaque fois que l'utilisateur actionne le système manuel de commande d'un organe d'inclinaison, l'unité de commande enregistre dans sa mémoire la position de l'engin le long de la trajectoire et soit une durée de cet actionnement, soit une distance parcourue par l'engin pendant cet actionnement et, quelques secondes après la fin de cet actionnement, l'unité de commande enregistre dans sa mémoire une première donnée relative à l'inclinaison du bras correspondant au système manuel de commande actionné,
- une étape de pulvérisation c2), postérieure à l'étape préalable b2), dans laquelle, pendant la pulvérisation,
   - l'engin parcourt la surface du terrain, à une deuxième vitesse supérieure ou égale à la première vitesse, selon la trajectoire empruntée pendant l'étape préalable b2) et
   - lorsque l'engin atteint une des positions enregistrées lors de l'étape préalable b2), l'unité de commande pilote l'organe d'inclinaison, actionné pour cette position par l'utilisateur à l'étape préalable b2), soit pendant une durée égale à la durée d'actionnement correspondante enregistrée lors de l'étape préalable b2), soit jusqu'à ce que l'engin ait parcouru une distance égale à la distance correspondante parcourue pendant l'étape préalable b2), et, quelques secondes après la fin de l'actionnement, l'unité de commande compare une deuxième donnée relative à l'inclinaison du bras correspondant avec la première donnée correspondante enregistrée lors de l'étape préalable b2) et, si la deuxième donnée diffère de plus ou moins 1% de la première donnée, l'unité de commande pilote cet organe d'inclinaison dans un sens de réduction de la différence entre la deuxième donnée et la première donnée.

Selon des aspects avantageux mais non obligatoires de l'invention, de tels procédés peuvent incorporer une ou plusieurs des caractéristiques suivantes, prises dans toute combinaison techniquement admissible :
- La distance minimale est comprise entre 30 cm et 70 cm, de préférence de l'ordre de 50 cm.
- La distance optimale est comprise entre 50 cm et 100 cm, de préférence de l'ordre de 70 cm.
- La distance maximale est comprise entre 70 cm et 150 cm, de préférence de l'ordre de 100 cm.

L'invention sera mieux comprise et d'autres avantages de celle-ci apparaîtront plus clairement à la lumière de la description qui va suivre d'un engin agricole de pulvérisation et d'un procédé de pulvérisation conformes à son principe, donnée uniquement à titre d'exemple et faite en référence aux dessins annexés dans lesquels :
- la figure 1 est une vue arrière d'un engin agricole selon l'invention ;
- la figure 2 est une vue en perspective qui représente schématiquement l'engin de la figure 1 ; et
- la figure 3 est une vue semblable à la figure 1 d'un engin agricole conforme à un deuxième mode de réalisation de l'invention.

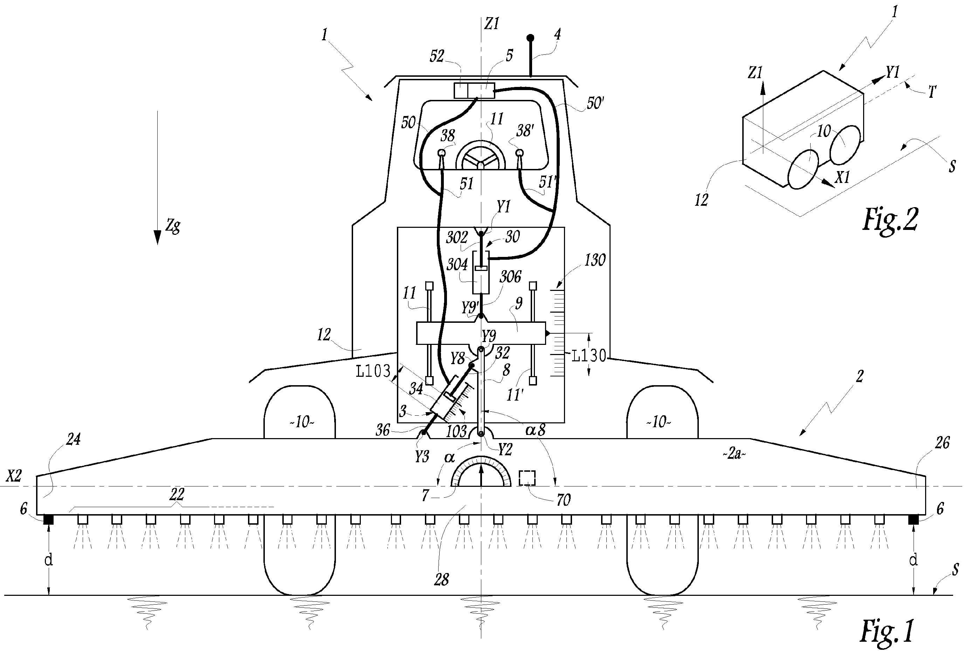

La figure 1 montre un engin agricole 1 de pulvérisation d'un liquide phytosanitaire qui est pourvu d'une rampe de pulvérisation 2 située à l'arrière de l'engin 1. En alternative, la rampe 2 est située à l'avant de l'engin 1. L'engin 1 est également pourvu d'un moteur non représenté qui appartient à des moyens de déplacement de l'engin 1 sur un terrain, avec une transmission, un volant 11 et des roues 10. L'engin 1 est donc automoteur et autonome, mais en alternative la rampe 2 peut être supportée par une remorque attelée à un engin automoteur quelconque. L'engin 1 est un tracteur, mais d'autres engins peuvent être utilisés.

Comme le montre la figure 2, sur laquelle l'engin 1 est représenté schématiquement, on note X1 un axe transversal de l'engin 1, perpendiculaire à sa direction d'avance en ligne droite, Y1 un axe longitudinal d'un châssis 12 de l'engin 1, parallèle à une direction d'avance en ligne droite de l'engin 1, et Z1 un premier axe de l'engin 1 perpendiculaire aux axes X1 et Y1. Les axes X1, Y1 et Z1 sont fixes par rapport au châssis 12 de l'engin 1.

Aux figures 1 et 2, l'engin 1 repose sur la surface S d'un terrain plat horizontal sur lequel une végétation, non représentée, peut être plantée. L'axe transversal X1 du châssis 12 de l'engin 1 est donc horizontal, voire légèrement incliné, et l'axe Z1 est alors vertical, voire légèrement incliné sur le côté, soit sensiblement vertical. Toutefois, lorsque l'inclinaison de la surface S varie, l'axe Z1 s'incline par rapport à la verticale.

On note Zg un deuxième axe vertical, dont la direction correspond à la pesanteur terrestre. A la figure 1, l'axe Z1 est parallèle à l'axe Zg.

L'engin 1 est pourvu d'une unité de commande 5 qui comprend une mémoire 52 de stockage d'informations.

L'engin 1 est pourvu d'un récepteur 4 apte à communiquer avec un système de géolocalisation non représenté. Le système de géolocalisation peut être de type Global Positioning System (G.P.S.). Le récepteur 4, associé au système de géolocalisation, permet de repérer la position de l'engin 1 sur la surface S.

Dans la suite de la description, les éléments qualifiés d'inférieurs sont situés plus proches de la surface S que les éléments qualifiés de supérieurs.

La rampe 2 comprend un unique bras 2a qui s'étend selon un axe longitudinal X2, sensiblement parallèle à l'axe X1 lorsque l'engin 1 repose sur un terrain plat horizontal. Des moyens de pulvérisation 22 sont répartis sur la rampe 2, le long de l'axe longitudinal X2, et projettent un liquide phytosanitaire sur la surface S.

La rampe 2 est pourvue de deux capteurs 6. Un premier capteur 6 est situé à une première extrémité 24 de la rampe 2 et un deuxième capteur 6 est situé au niveau de l'autre extrémité 26 de la rampe 2. Un troisième capteur 6 facultatif, non représenté, est situé entre les deux premiers capteurs, dans une zone médiane 28 de la rampe 2. Chaque capteur 6 permet de mesurer une distance d entre ce capteur 6 et la surface S ou, le cas échéant, entre le capteur 6 et une végétation plantée dans le terrain. Les capteurs 6 et les moyens de pulvérisation 22 sont, de manière avantageuse mais non obligatoire, situés dans un même plan perpendiculaire à l'axe Z1. A la figure 1, l'axe longitudinal X2 de la rampe 2 étant parallèle à la surface S, les distances d mesurées par chaque capteur 6 sont identiques.

En variante non représentée, les capteurs 6 et les moyens de pulvérisation 22 sont situés dans un plan légèrement incliné par rapport à un plan perpendiculaire à l'axe Z1. De plus, les capteurs 6 peuvent être décalés selon l'axe Z1 par rapport aux moyens de pulvérisation 22. Dans ce cas, l'unité de commande 5 est informée de ce décalage.

En variante non représentée, la rampe 2 peut comprendre plusieurs tronçons articulés entre eux autour d'axes parallèles à l'axe Z1, de sorte qu'il est possible de replier la rampe 2 pour réduire sa longueur, ce qui est avantageux lorsque l'engin 1 circule sur une route étroite.

Une bielle 8, parallèle à l'axe Z1 dans la configuration de la figure 1, est articulée en rotation, au niveau de son extrémité inférieure, avec la rampe 2, autour d'un axe Y2 parallèle à l'axe Y1. La rampe 2 est équipée d'un capteur 70 facultatif, représente en pointillés à la figure 1, pour la mesure d'un angle de correction α8 défini entre la bielle 8 et l'axe longitudinal X2 de la rampe 2. L'angle de correction α8 est situé à droite de la bielle 8 à la figure 1. Le capteur 70 est relié à l'unité de commande 5 par une liaison filaire ou sans fil non représentée, et permet de mesurer une donnée relative à l'inclinaison du bras 2a de la rampe 2. L'extrémité supérieure de la bielle 8 est articulée en rotation, autour d'un axe Y9 parallèle à l'axe Y1, avec une glissière 9. La glissière 9 est mobile en translation selon l'axe Z1 par rapport au châssis 12 de l'engin 1. Pour ce faire, la glissière 9 coopère avec deux rails 11 et 11' parallèles à l'axe Z1 et qui sont fixés au châssis 12. Les rails 11 et 11' sont situés de part et d'autre de l'axe Z1.

L'engin 1 est pourvu d'un organe d'inclinaison de la rampe 2 dans un plan X1-Z1 perpendiculaire à la direction d'avance Y1 de l'engin 1. Le plan X1-Z1 est parallèle aux axes X1 et Z1. L'organe d'inclinaison permet l'inclinaison de la rampe 2 par rapport au châssis 12 de l'engin 1 et comprend un premier vérin 3 qui peut être hydraulique ou électrique, mais d'autres actionneurs peuvent convenir.

Le premier vérin 3 comprend une tige 32 et un corps 34. La tige 32 comprend une extrémité supérieure, située à l'opposé du corps 34, articulée en rotation avec la bielle 8 autour d'un axe Y8 parallèle à l'axe Y1 et situé à proximité de l'axe Y9. Le corps 34 du premier vérin 3 est relié à la rampe 2 par une barre 36. Une extrémité inférieure de la barre 36, opposée au corps 34 du vérin 3, est articulée en rotation avec la rampe 2 autour d'un axe Y3 parallèle à l'axe Y1. Le vérin 3 permet donc la rotation de la rampe 2 autour de l'axe Y2. L'axe Y3 est décalé le long de l'axe longitudinal X2 de la rampe 2, en direction de la première extrémité 24 de la rampe 2, par rapport à l'axe Y2.

Le premier vérin 3 est équipé d'un système de mesure 103 facultatif qui permet de mesurer une distance L103 correspondant à la position de la tige 32 du premier vérin 3 par rapport au corps 34 du premier vérin 3. Le système de mesure 103 est relié à l'unité de commande 5 par une liaison non représentée qui peut être filaire ou sans fil. La grandeur L103 correspond à une configuration du premier vérin 3, c'est-à-dire à un agencement particulier de la tige 32 par rapport au corps 34 du premier vérin 3. De même, l'angle de correction α8 correspond à une première configuration du premier vérin 3.

Le système de mesure permet de mesurer une donnée L103 relative à l'inclinaison du bras 2a de la rampe 2.

On note α un angle défini entre l'axe Z1 et l'axe longitudinal X2 de la rampe 2 dans un plan perpendiculaire à l'axe Y1. L'angle α est situé, à la figure 1, dans le quadrant supérieur gauche. Dans la configuration de la figure 1, l'angle α est égal à 90°.

Les capteurs 6 sont reliés à l'unité de commande 5 par des liaisons filaires non représentées qui permettent aux capteurs 6 de transmettre à l'unité de commande 5 des informations relatives aux valeurs qu'ils mesurent. En variante, les moyens de liaison entre les capteurs 6 et l'unité de commande 5 sont sans fil.

L'engin 1 est également pourvu d'un organe de montée/descente de la rampe 2 selon l'axe Z1. En variante, l'organe de montée/descente de la rampe 2 est selon l'axe Zg. L'organe de montée/descente comprend un deuxième vérin 30 qui peut être hydraulique ou électrique, mais d'autres actionneurs peuvent convenir.

Le deuxième vérin 30 comprend une tige 302 et un corps 304. La tige 302 comprend une extrémité supérieure qui est située à l'opposé du corps 304 du deuxième vérin 30 et qui est articulée en rotation avec l'engin 1 autour de l'axe Y1.

Le corps 304 du deuxième vérin 30 est relié à la glissière 9 par une barre 306. Une extrémité inférieure de la barre 306, opposée au corps 304 du deuxième vérin 30, est articulé en rotation avec la glissière 9 autour d'un axe Y9' parallèle à l'axe Y1. Les axes Y1, Y2, Y9 et Y9' sont alignés le long de l'axe Z1.

La translation de la tige 302 du deuxième vérin 30 provoque la translation de la rampe 2 selon l'axe Z1, par l'intermédiaire de la bielle 8 et de la glissière 9, ce qui rapproche ou éloigne la rampe 2 de la surface S.

La glissière 11 est pourvue d'un système de mesure 130 facultatif qui permet de mesurer une distance L130 correspondant à la position de la glissière 11 par rapport au châssis 12, le long de l'axe Z1. La grandeur L130 correspond à une configuration du deuxième vérin 30, c'est-à-dire à un agencement particulier de la tige 302 par rapport au corps 304 du deuxième vérin 30. Le système de mesure 130 est relié à l'unité de commande 5 par une liaison non représentée qui peut être filaire ou sans fil. En variante, le système de mesure 130 peut être intégré au deuxième vérin 30.

Dans un autre mode de réalisation, non représenté, dans lequel l'organe d'inclinaison et/ou l'organe de montée/descente comprennent un actionneur autre qu'un vérin, les systèmes de mesure 103 et 130 sont remplacés par d'autres systèmes de mesures, adaptés à ces actionneurs, permettant de mesurer une grandeur correspondant à une configuration de ces actionneurs.

La translation de la tige 32 du premier vérin 3 provoque l'inclinaison de l'axe longitudinal X2 de la rampe 2 dans le plan X1-Z1, c'est-à-dire la variation de l'angle α.

L'engin 1 est pourvu d'un système manuel de commande du premier vérin 3. Ce système manuel de commande comprend, par exemple, une première manette 38 placée dans l'habitacle de l'engin 1 à proximité du volant 11. La première manette 38 est reliée au premier vérin 3 par une première liaison filaire 51.

Le système manuel de commande du premier vérin 3 permet à l'utilisateur de faire varier l'angle α, c'est-à-dire de faire varier l'inclinaison de la rampe 2 autour de l'axe Y2, dans le plan X1-Z1, dans le but de la rendre parallèle à la surface S.

La rampe 2 est pourvue d'un inclinomètre 7, qui mesure l'angle α. Le premier vérin 3 est relié à l'unité de commande 5 par une liaison filaire 50 qui permet à l'unité de commande 5 de piloter le premier vérin 3.

Le deuxième vérin 30 est relié à l'unité de commande 5 par une liaison filaire 50' qui permet à l'unité de commande 5 de piloter le deuxième vérin 30.

L'engin 1 est également pourvu d'un système manuel de commande du deuxième vérin 30. Ce système manuel de commande comprend, par exemple, une deuxième manette 38' placée dans l'habitacle de l'engin 1 à proximité du volant 11. La deuxième manette 38' est reliée au deuxième vérin 30 par une liaison filaire 51'.

En variante, les liaisons filaires 50, 50', 51 et 51' sont sans fil.

L'habitacle de l'engin 1 est configuré de sorte que l'utilisateur peut piloter simultanément les moyens de déplacement de l'engin 1, avec le volant 11, et les systèmes manuels de commande du premier vérin 3 et du deuxième vérin 30, c'est-à-dire les manettes 38 et 38'.

La suite de la description concerne un premier procédé de pulvérisation d'un liquide phytosanitaire sur une végétation plantée dans le terrain, au moyen de l'engin 1.

Ce procédé comprend une étape initiale a), dans laquelle l'utilisateur entre dans l'unité de commande 5 la valeur d'une distance minimale dₘᵢₙ et la valeur d'une distance maximale dₘₐₓ supérieure à la distance minimale dₘᵢₙ.

La distance minimale dₘᵢₙ peut être comprise entre 30 cm et 70 cm, de préférence de l'ordre de 50 cm.

La distance maximale dₘₐₓ peut être comprise entre 70 cm et 150 cm, de préférence de l'ordre de 100 cm.

Le premier procédé comprend une étape préalable b) qui peut être effectuée avant ou après que la végétation a été plantée dans le terrain. Dans l'étape préalable b), avant que l'engin 1 procède à la pulvérisation du liquide phytosanitaire sur la végétation, ou lors d'une précédente pulvérisation, l'engin 1 parcourt le terrain, à une vitesse V1 de préférence assez lente, selon une trajectoire T prédéterminée, de sorte que la rampe 2 balaye toute la surface S du terrain sur laquelle est ou sera plantée la végétation.

Simultanément, pendant l'étape préalable b), l'utilisateur manoeuvre, sur toute la trajectoire T, avec précision et sans précipitation, le système manuel de commande 38 du vérin 3 et le système manuel de commande 38' du deuxième vérin 30, de sorte que la distance d entre chaque capteur 6 et la surface S ou la végétation plantée dans le terrain est comprise entre la distance minimale dₘᵢₙ et la distance maximale dₘₐₓ. De préférence, l'utilisateur manoeuvre les systèmes de commande 38 et 38' de sorte que la distance d entre chaque capteur 6 et la surface S ou la végétation est sensiblement égale à une distance optimale dₒₚₜ. La distance optimale dₒₚₜ permet une pulvérisation optimale. La distance optimale dₒₚₜ peut être comprise entre 50 cm et 100 cm, de préférence de l'ordre de 70 cm. L'étape préalable b) peut être avantageusement effectuée alors que l'engin 1 se déplace à une première vitesse V1 faible, c'est à dire permettant à l'utilisateur peut piloter le vérin 3 de manière précise.

Pendant l'étape préalable b), l'unité de commande 5 enregistre dans sa mémoire 52, pour des positions échantillonnées de l'engin 1 le long de la trajectoire T, d'une part la distance d entre chaque capteur 6 et la surface S ou la végétation et, d'autre part, au moins une donnée relative à l'inclinaison de la rampe 2. Par exemple, cette opération peut être effectuée tous les 50 cm le long de la trajectoire T de l'engin. La ou les données relatives à l'inclinaison de la rampe 2 peuvent être l'angle α, mesuré par l'inclinomètre 7, l'angle de correction α8, mesuré par le capteur 70 et/ou la longueur L103, mesurée par le système de mesure 103.

De manière facultative, pendant l'étape préalable b), l'unité de commande 5 enregistre dans sa mémoire 52, pour des positions échantillonnées de l'engin 1 le long de la trajectoire T, la longueur L103 correspondant à la configuration du premier vérin 3.

De même, de manière facultative, lors de l'étape préalable b), l'unité de commande 5 enregistre dans sa mémoire 52, pour des positions échantillonnées de l'engin 1 le long de la trajectoire T, la longueur L130 correspondant à la configuration du deuxième vérin 30.

De manière avantageuse mais non obligatoire, lors de l'étape préalable b), dès que la distance d mesurée par au moins un capteur 6 est inférieure à la distance minimale dₘᵢₙ, l'unité de commande 5 pilote automatiquement le deuxième vérin 30 pour éloigner la rampe 2 de la surface S jusqu'à ce que la distance d mesurée par chaque capteur 6 soit supérieure ou égale à la distance optimale dₒₚₜ. Ce pilotage est effectué de manière prioritaire, c'est-à-dire que le relevage de la rampe 2 est effectué même si l'utilisateur commande manuellement les vérins 3 et 30. En effet, ce pilotage permet d'éviter la collision entre la rampe 2 et le terrain, ce qui est primordial.

De même, de manière avantageuse mais non obligatoire, lors de l'étape initiale a), l'utilisateur entre dans l'unité de commande 5 la valeur d'une distance optimale dₒₚₜ comprise entre la distance minimale dₘᵢₙ et la distance maximale dₘₐₓ. Lors de l'étape préalable b), l'unité de commande 5 pilote automatiquement le premier vérin 3 et/ou le deuxième vérin 30 de sorte que la distance d mesurée par chaque capteur 6 est sensiblement égale à la distance optimale dₒₚₜ.

De plus, lors de l'étape préalable b), l'utilisateur peut utiliser les manettes 38 et 38' pour, le cas échéant, corriger manuellement le pilotage de l'unité de commande 5.

Au terme de l'étape préalable b), la mémoire 52 de l'unité de commande 5 a enregistré, en fonction des positions de l'engin 1 échantillonnées, l'angle α, la distance d entre chaque capteur 6 et le terrain ou la végétation et éventuellement les longueurs L103 et L130.

Dans une étape de pulvérisation c), successive à l'étape b), et pendant que la rampe 2 pulvérise le liquide phytosanitaire, l'engin 1 parcourt la surface S de la végétation, à une deuxième vitesse V2 supérieure ou égale à la première vitesse V1, selon la trajectoire T empruntée pendant l'étape préalable b). Idéalement, la trajectoire T empruntée par l'engin 1 lors de l'étape de pulvérisation c) est exactement la même que la trajectoire T empruntée lors de l'étape préalable b). En pratique, les deux trajectoires peuvent être légèrement différentes.

Dans l'étape de pulvérisation c), pour chaque position échantillonnée à l'étape préalable b) et en fonction des données d et α, α8, et/ou L103 et éventuellement L130 enregistrées par les capteurs 6 et l'inclinomètre 7, le capteur 70 et/ou le système de mesure 103 et éventuellement le système de mesure 130 à l'étape préalable b), l'unité de commande 5 pilote automatiquement le premier vérin 3 et le deuxième vérin 30, de sorte que la distance d entre chaque capteur 6 et le terrain ou la végétation est comprise entre la distance minimale dₘᵢₙ et la distance maximale dₘₐₓ prédéterminées lors de l'étape initiale a). Lors de l'étape de pulvérisation c), l'unité de commande 5 peut avantageusement, mais non obligatoirement, piloter le premier vérin 3 et/ou le deuxième vérin 30 de sorte que, pour chaque position échantillonnée à l'étape préalable b), l'inclinaison α de la rampe 2 est semblable à l'inclinaison α définie manuellement par l'utilisateur lors de l'étape préalable b).

De manière avantageuse mais non obligatoire, lors de l'étape de pulvérisation c), l'unité de commande 5 peut piloter le premier vérin 3 et le deuxième vérin 30 de sorte que, pour chaque position échantillonnée à l'étape préalable b), la distance d mesurée par chaque capteur 6 est sensiblement égale à la distance optimale dₒₚₜ définie précédemment. Dans tous les cas, la distance d mesurée par chaque capteur 6 est comprise entre la distance minimale dₘᵢₙ et la distance maximale dₘₐₓ.

Avantageusement, l'unité de commande 5 est programmée pour piloter le premier vérin 3 et le deuxième vérin 30, de manière anticipée, c'est-à-dire avec un peu d'avance sur la prochaine position échantillonnée, de sorte que la rampe 2 s'incline à une vitesse n'entraînant pas d'instabilités. Par exemple, lors de l'étape de pulvérisation c), lorsque l'engin 1 est situé à une position échantillonnée lors de l'étape préalable b), l'unité de commande 5 peut faire débuter la translation de la tige 32 ou 302 du premier ou du deuxième vérin 3 ou 30 et faire translater cette tige progressivement jusqu'à ce que l'engin 1 atteigne la position échantillonnée suivante.

En particulier, l'unité de commande 5 peut anticiper, grâce à la connaissance de la configuration des vérins 3 et 30, correspondant aux longueurs L103 et L130, lors de sa prochaine position échantillonnée, les variations de la géométrie du terrain, en se basant également sur les informations d, α et/ou α8 enregistrées par les capteurs 6 et l'inclinomètre 7 et/ou le capteur 70 lors de l'étape préalable b), ce qui permet à l'unité de commande 5, lors de l'étape de pulvérisation c), de piloter le déplacement des tiges 32 et 302 des vérins 3 et 30 à une vitesse n'entraînant pas de mouvements parasites de la rampe 2 causés par l'inertie.

La suite de la description concerne un second procédé de pulvérisation d'un liquide phytosanitaire sur une végétation plantée sur le terrain au moyen de l'engin 1.

Ce second procédé comprend une étape initiale a2), dans laquelle, avant la pulvérisation, l'utilisateur entre dans l'unité de commande 5 la valeur de la distance minimale dₘᵢₙ et la valeur de la distance optimale dₒₚₜ.

Dans une étape préalable b2), postérieure à l'étape initiale a2), l'engin 1 parcourt la surface S du terrain, à une première vitesse V1, selon une trajectoire T déterminée, de sorte que la rampe 2 balaye toute la surface S. Dès que la distance d mesurée par au moins un capteur 6 est inférieure à la distance minimale dₘᵢₙ entrée lors de l'étape initiale a2), l'unité de commande 5 pilote le deuxième vérin 30, jusqu'à ce que la distance d mesurée par ce capteur 6 soit égale à la distance optimale dₒₚₜ. L'utilisateur manoeuvre le système manuel de commande 38 du premier vérin 3 de sorte que la distance d mesurée par chaque capteur 6 est globalement égale à la distance optimale dₒₚₜ. A chaque fois que l'utilisateur actionne le système manuel de commande 38 du premier vérin 3, l'unité de commande 5 enregistre dans sa mémoire 52 la position de l'engin 1 le long de la trajectoire T et soit une durée de cet actionnement, soit une distance parcourue par l'engin 1 pendant cet actionnement et, quelques secondes après la fin de cet actionnement, une première donnée α, α8 ou L103 relative à l'inclinaison du bras 2a correspondant au système manuel de commande 38 actionné par l'utilisateur.

Dans une étape de pulvérisation c2), postérieure à l'étape préalable b2) et pendant la pulvérisation, l'engin 1 parcourt la surface S, à une deuxième vitesse V2 supérieure ou égale à la première vitesse V1, selon la trajectoire T empruntée pendant l'étape préalable b2). La conservation de la même vitesse V1 et V2 permet d'intégrer les effets de l'inertie de la rampe 2. Lorsque l'engin 1 atteint une des positions enregistrées lors de l'étape préalable b2), l'unité de commande 5 pilote le premier vérin 3 actionné, pour cette position, par l'utilisateur à l'étape préalable b2), soit pendant une durée égale à la durée d'actionnement correspondante enregistrée lors de l'étape préalable b2), soit jusqu'à ce que l'engin 1 ait parcouru une distance égale à la distance correspondante parcourue pendant l'étape préalable b2). Quelques secondes après la fin de l'actionnement, l'unité de commande 5 compare une deuxième donnée α, α8 ou L103 relative à l'inclinaison du bras 2a correspondant avec la première donnée α, α8 ou L103 correspondante enregistrée lors de l'étape préalable b2) et, si la deuxième donnée α, α8 ou L103 diffère de plus ou moins 1% de la première donnée, l'unité de commande 5 pilote le premier vérin 3 dans un sens de réduction de la différence entre la deuxième donnée α, α8 ou L103 et la première donnée α, α8 ou L103. Ce pilotage peut être effectué par impulsions successives.

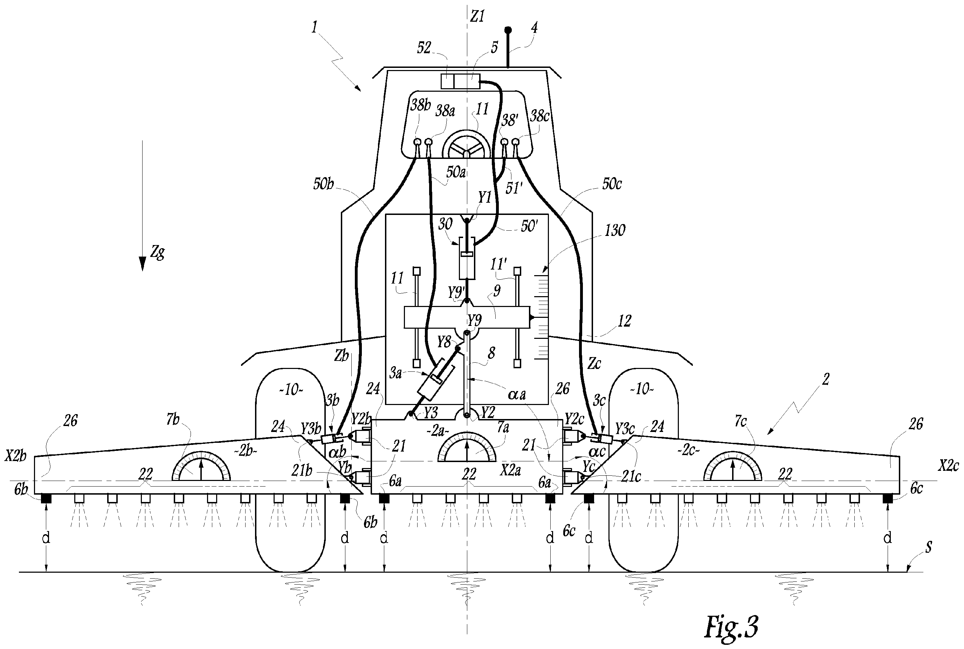

La figure 3 correspond à un deuxième mode de réalisation de l'invention dans lequel l'engin 1 est pourvu d'une rampe 2 de pulvérisation qui comprend trois bras 2a, 2b et 2c articulés. A la figure 2, les éléments semblables à ceux de la figure 1 portent les mêmes références numériques auxquelles est éventuellement ajoutée soit la lettre « a », dans le cas où l'élément concerne le bras 2a, soit la lettre « b », dans le cas où l'élément concerne le bras 2b, soit la lettre « c », dans le cas où l'élément concerne le bras 2c. Le bras 2a est centré sur l'axe Z1 et est situé entre le bras 2b et le bras 2c. Le bras 2a constitue un « cadre central » pour la rampe 2.

On note X2a un axe longitudinal du cadre central 2a, X2b un axe longitudinal du bras 2b et X2c un axe longitudinal du bras 2c.

Le cadre central 2a de la rampe 2 est relié à l'engin 1 par une structure semblable à celle décrite en référence au premier mode de réalisation. Cette structure comprend un premier vérin 3a, qui correspond au vérin 3 de la figure 1, une bielle 8, une glissière 9, deux rails 11 et 11' et un deuxième vérin 30. Le vérin 3a permet l'inclinaison du cadre central 2a par rapport au châssis 12 de l'engin 1, autour de l'axe Y2 et dans un plan X2a-Z1 perpendiculaire à l'axe Y2.

On note αa un angle situé du côté du bras 2c par rapport à l'axe Z1 et défini dans le plan X2a-Z1, entre les axes X2a et Z1. A la figure 1, l'angle αa est situé dans le quadrant supérieur droit. Le plan X2a-Z1 passe par les axes X2a et Z1 et est perpendiculaire à la direction d'avance Y1 de l'engin 1.

De manière facultative, la rampe 2 est équipée d'un capteur non représenté, analogue au capteur 70 de l'engin 1 conforme au premier mode de réalisation, pour la mesure d'un angle de correction, analogue à l'angle α8 et défini entre la bielle 8 et l'axe longitudinal X2a du cadre central 2a.

Le bras 2b est articulé en rotation avec une première extrémité axiale 24 du cadre central 2a autour d'un axe Yb parallèle à l'axe Y1. Pour ce faire, le cadre central 2a est pourvu d'un élément 21 qui coopère avec un élément 21 b, fixé au niveau d'une première extrémité 24 du bras 2b, pour former l'articulation. L'engin 1 est pourvu d'un vérin 3b dont une première extrémité est articulée en rotation, autour d'un axe Y3b, avec le bras 2b et dont une deuxième extrémité est articulée en rotation, autour d'un axe Y2b, avec le cadre central 2a. Les axes Y2b et Y3b sont parallèles à l'axe Y1.

De manière facultative, la rampe 2 est équipée d'un capteur non représenté pour la mesure d'un angle, dit angle de géométrie, défini entre l'axe longitudinal X2b du bras 2b et l'axe longitudinal X2a du cadre central 2a.

On note Zb un premier axe de référence, fixe par rapport au châssis 12 de l'engin 1, parallèle à l'axe Z1. A la figure 3, l'axe Zb est confondu avec les axes Yb et Y2b. Toutefois, lorsque la rampe 2 s'incline, l'axe Zb ne passe plus par les axes Yb et Y2b.

Le bras 2c est articulé en rotation avec une deuxième extrémité axiale 26 du cadre central 2a autour d'un axe Yc parallèle à l'axe Y1. Pour ce faire, le cadre central 2a est pourvu d'un élément 21 supplémentaire qui coopère avec un élément 21 c, fixé au niveau d'une première extrémité 24 du bras 2c, pour former l'articulation. L'engin 1 est pourvu d'un vérin 3c supplémentaire dont une première extrémité est articulée en rotation, autour d'un axe Y3c, avec le bras 2c et dont une deuxième extrémité est articulée en rotation, autour d'un axe Y2c, avec le cadre central 2a.

De manière facultative, la rampe 2 est équipée d'un capteur non représenté pour la mesure d'un angle, dit angle de géométrie, défini entre l'axe longitudinal X2c du bras 2c et l'axe longitudinal X2a du cadre central 2a.

On note Zc un second axe de référence, fixe par rapport au châssis 12 de l'engin 1, parallèle à l'axe Z1. A la figure 3, l'axe Zc est confondu avec les axes Yc et Y2c. Toutefois, lorsque la rampe 2 s'incline, l'axe Zc ne passe plus par les axes Yc et Y2c.

Les capteurs non représentés de mesure des angles de correction et de géométrie sont reliés à l'unité de commande 5 par des liaisons filaires ou sans fil non représentées, et permettent de mesurer chacun une donnée relative à l'inclinaison des bras 2a, 2b et 2c.

L'angle de correction et les angles de géométrie sont des grandeurs qui correspondent chacune à une configuration du vérin 3, 3a, 3b ou 3c, de manière analogue aux grandeurs L103 et L130.

La translation de la tige du vérin 3b ou 3c provoque l'inclinaison du bras 2b ou 2c dans le plan X2a-Z1, autour de l'axe Yb ou Yc, par rapport à l'axe de référence Zb ou Zc et donc par rapport à l'axe Z1. Les vérins 3a, 3b et 3c permettent d'incliner les bras 2a, 2b et 2c par rapport au châssis 12 de l'engin 1.

On note αb un angle situé du côté du bras 2b par rapport à l'axe Zb et défini dans le plan X2a-Z1 entre les axes Zb et X2b. On note αc un angle situé du côté du bras 2c par rapport à l'axe Zc et défini dans le plan X2a-Z1 entre les axes Zc et X2c. Dans la configuration de la figure 3, les angles αa, αb et αc sont égaux à 90°. Les angles αb et αc correspondent à l'inclinaison des bras 2b et 2c dans le plan X1-Z1. En variante, l'angle αa est défini entre les axes X2a et Zg, l'angle αb est défini entre les axes X2b et Zg et l'angle αc est défini entre les axes X2c et Zg.

En variante non représentée, l'engin 1 comprend, pour au moins un des bras 2a, 2b et/ou 2c de la rampe 2, un organe d'inclinaison de ce ou de ces bras 2a, 2b et/ou 2c dans le plan X2a-Z1, c'est-à-dire qu'au moins un bras 2a, 2b ou 2c peut ne pas comporter d'organe d'inclinaison.

Chaque bras 2a, 2b et 2c est pourvu de deux capteurs 6a, 6b ou 6c qui sont situés au niveau de chaque extrémité axiale 24 et 26 du bras 2a, 2b ou 2c et qui mesurent chacun leur propre distance d, comme indiqué à la figure 1.

En variante non représentée, au moins un des bras 2a, 2b et/ou 2c de la rampe 2 sont pourvus d'un capteur 6a, 6b ou 6c, c'est-à-dire qu'au moins un bras de la rampe 2 peut ne pas comporter de capteur.

L'engin 1 est pourvu d'un système manuel de commande des vérins 3a, 3b et 3c qui permet à l'utilisateur de piloter séparément les vérins 3a, 3b et 3c. Ce système manuel de commande comprend une première manette 38a, une deuxième manette 38b et une troisième manette 38c. La première manette 38a est reliée au vérin 3a par une liaison filaire 50a qui permet à l'utilisateur de commander manuellement l'inclinaison du cadre central 2a, c'est-à-dire de faire varier l'angle αa. La deuxième manette 38b est reliée au vérin 3b par une liaison filaire 50b qui permet à l'utilisateur de commander manuellement l'inclinaison du bras 2b, c'est-à-dire de faire varier l'angle αb.

La troisième manette 38c est reliée au vérin 3c par une liaison filaire 50c qui permet à l'utilisateur de commander manuellement l'inclinaison du bras 2c, c'est-à-dire de faire varier l'angle αc.

L'engin 1 est pourvu d'un système manuel de commande 38' du vérin 30 qui comprend une manette 38' reliée au vérin 30 par une liaison filaire 51'.

Les liaisons filaires 50a, 50b, 50c et 51' peuvent être sans fil.

L'engin 1 est pourvu d'une unité de commande 5 qui comprend une mémoire 52 et qui est reliée au vérin 30 par une liaison filaire 50'. Chaque capteur 6a, 6b et 6c est relié à l'unité de commande 5 par des liaisons filaires non représentées. Ces liaisons peuvent également être sans fil.

Chaque bras 2a et 2b est pourvu d'un inclinomètre 7a, 7b ou 7c de mesure de l'angle αa, αb ou αc et de deux capteurs 6a, 6b ou 6c qui mesurent chacun une distance d semblable à celle du mode de réalisation de la figure 1.

En variante non représentée, au moins un des bras 2a, 2b et/ou 2c de la rampe 2 sont pourvus d'un inclinomètre 7a, 7b ou 7b, c'est-à-dire qu'au moins un bras de la rampe 2 peut ne pas comporter d'inclinomètre.

Chaque capteur 6a, 6b et 6c et chaque inclinomètre 7a, 7b et 7c est relié à l'unité de commande 5 par des liaisons filaires non représentées. Ces liaisons pourraient également être le fil.

Le premier procédé de pulvérisation du liquide phytosanitaire au moyen de l'engin 1 conforme au deuxième mode de réalisation est semblable au procédé décrit en référence au premier mode de réalisation.

Toutefois, lors de l'étape préalable b), l'utilisateur manoeuvre, sur toute la trajectoire, le système manuel de commande 38a, 38b et 38c de chaque vérin 3a, 3b et 3c.

De plus, lors de l'étape préalable b), l'unité de commande 5 enregistre dans sa mémoire 52, pour les positions échantillonnées de l'engin 1 sur la surface de la végétation, la distance d mesurée par chaque capteur 6a, 6b et 6c et au moins une donnée relative à l'inclinaison de chaque bras 2a, 2b et 2c de la rampe 2. La ou les données relatives à l'inclinaison de chaque bras 2a, 2b et 2c de la rampe 2 peuvent être les angles αa, αb et αc, les angles de géométrie, l'angle de correction et/ou des grandeurs correspondant à une configuration des vérins 3a, 3b et 3c.

L'étape de pulvérisation c) du deuxième mode de réalisation est semblable à l'étape de pulvérisation c) du premier mode. Toutefois, l'unité de commande 5 pilote indépendamment chaque vérin 3a, 3b et 3c, ainsi que le deuxième vérin 30.

Le second procédé de pulvérisation du liquide phytosanitaire au moyen de l'engin 1 conforme au deuxième mode de réalisation est semblable au procédé décrit en référence au premier mode de réalisation. Toutefois, lors de l'étape préalable b2), l'utilisateur manoeuvre chaque manette 38a, 38b et 38c pour commander l'inclinaison de chaque bras 2a, 2b et 2c et l'unité de commande 5 enregistre dans sa mémoire 52 une donnée αa, αb, αc relative à l'inclinaison de chaque bras 2a, 2b et 2c. De plus, lors de l'étape de pulvérisation c2), l'unité de commande 5 pilote les bras 2a, 2b, 2c correspondants aux bras 2a, 2b, 2c qui ont été commandés par l'utilisateur lors de l'étape préalable b2), en fonction des données αa, αb, αc relatives à l'inclinaison des bras 2a, 2b, 2c.

Dans d'autres modes de réalisation de l'invention, non représentés, le nombre et le placement des capteurs 6, 6a, 6b et 6c sur la rampe 2 peut varier. De même, chaque bras 2a, 2b et 2c de la rampe 2 peut comporter un nombre d'inclinomètres supérieur à 1.

Par ailleurs, la rampe 2 peut comporter un nombre de bras variable. Par exemple, de chaque côté du cadre central 2a, la rampe 2 peut comporter deux bras articulés l'un à l'autre.

En variante non représentée, la rampe 2 et les bras 2a, 2b et 2c de la rampe 2 s'inclinent autour d'un axe qui n'est pas parallèle à la direction d'avance Y1 de l'engin 1. Ainsi, la rampe 2 et les bras 2a, 2b et 2c de la rampe 2 peuvent être mobile en rotation autour d'un axe qui est incliné par rapport à la direction d'avance Y1. Dans ce cas, la rotation de la rampe 2 et des bras 2a, 2b et 2c ne se fait pas dans le plan X1-Z1 ou dans le plan X2a-Z1.

D'autre part, les organes d'inclinaison 3, 3a, 3b, 3c de la rampe 2, l'organe de montée/descente 30 et les moyens de fixation de la rampe 2 à l'engin 1 représentés ne sont pas limitatifs, l'invention pouvant être mise en oeuvre pour des engins qui diffèrent des tracteurs représentés sur les figures. Par exemple, l'organe de montée/descente 30 peut être de type à double parallélogramme déformable.

En outre, les modes de réalisation décrits ne sont pas limitatifs et leurs caractéristiques peuvent être combinées.

## Revendications

1. Engin agricole (1) de pulvérisation d'un liquide phytosanitaire sur un terrain cultivé, comprenant
- des moyens (10, 11) de déplacement de l'engin (1) sur la surface (S) du terrain,
- une rampe de pulvérisation (2) du liquide phytosanitaire comprenant au moins un bras (2a, 2b, 2c),
- pour le ou au moins un des bras (2a, 2b, 2c) de la rampe (2), un organe d'inclinaison (3, 3a, 3b, 3c) du bras (2a, 2b, 2c) par rapport à un châssis (12) de l'engin agricole (1),
- un organe de montée/descente (30) de la rampe (2) selon un premier axe (Z1) fixe par rapport au châssis (12) de l'engin et vertical, voire sensiblement vertical lorsque l'engin (1) repose sur une surface (S) plane horizontale ou par rapport à un deuxième axe (Zg) de même direction que la pesanteur terrestre,
- un système manuel de commande (38, 38a, 38b, 38c) de chaque organe d'inclinaison (3, 3a, 3b, 3c) et de l'organe de montée/descente (30),
- un récepteur (4) apte à communiquer avec un système de géolocalisation et
- une unité de commande (5),
le ou au moins un des bras (2a, 2b, 2c) de la rampe (2) étant pourvu d'au moins un capteur (6, 6a, 6b, 6c), chaque capteur (6, 6a, 6b, 6c) mesurant une distance (d) entre la surface (S) du terrain et ce capteur (6, 6a, 6b, 6c) ou, le cas échéant, entre une végétation plantée dans le terrain et ce capteur (6, 6a, 6b, 6c), l' habitacle de l'engin (1) est configuré de sorte qu'un utilisateur peut piloter simultanément les moyens (10, 11) de déplacement de l'engin (1) et le système manuel de commande (38, 38a, 38b, 38c), le ou au moins un des bras (2a, 2b, 2c) de la rampe (2) est pourvu
- d'un élément de mesure (7, 7a, 7b, 7c, 70, 103) d'une donnée (α, αa, αb, αc, α8, L103) relative à l'inclinaison, dans un plan (X1-Z1 ; X2a-Z1) perpendiculaire à la direction d'avance (Y1), d'un axe longitudinal (X2, X2a, X2b, X2c) du bras (2a, 2b, 2c) et l'unité de commande (5) est
- reliée à chaque capteur (6, 6a, 6b, 6c), au récepteur (4) et à l'élément de mesure (7, 7a, 7b, 7c, 70, 103),
- pourvue d'une mémoire (52) de stockage d'informations fournies, lorsque l'utilisateur manoeuvre le système manuel de commande (38, 38a, 38b, 38c) par chaque capteur (6, 6a, 6b, 6c), par le récepteur (4) et par chaque élément de mesure (7, 7a, 7b, 7c, 70, 103) et
- apte à piloter chaque organe d'inclinaison (3, 3a, 3b, 3c) et l'organe de montée/descente (30) en fonction des informations (d, α, α8, αa, αb, αc, L103) stockées dans la mémoire (52).

2. Engin (1) selon la revendication 1, **caractérisé en ce qu'**au moins un organe d'inclinaison (3, 3a, 3b, 3c) et/ou l'organe de montée/descente (30) comprend un vérin hydraulique ou électrique.

3. Engin (1) selon l'une des revendications précédentes, **caractérisé en ce que** le ou au moins un des bras (2a, 2b, 2c) de la rampe (2) est pourvu de deux capteurs (6, 6a, 6b, 6c).

4. Engin (1) selon l'une des revendications précédentes, **caractérisé en ce que** l'organe de montée/descente (30) et/ou le ou au moins un organe d'inclinaison (3, 3a, 3b, 3c) sont pourvus d'un système de mesure (103, 130, 70) d'une grandeur (L103, L130, α8) correspondant à une configuration de cet ou de ces organes (3, 3a, 3b, 3c, 30).

5. Procédé de pulvérisation d'un liquide phytosanitaire sur une végétation plantée sur un terrain au moyen d'un engin (1) selon l'une des revendications précédentes, **caractérisé en ce qu'**il comprend:
- une étape initiale a), dans laquelle, avant la pulvérisation, l'utilisateur entre dans l'unité de commande (5) la valeur d'une distance minimale (dₘᵢₙ) et la valeur d'une distance maximale (dₘₐₓ) supérieure à la distance minimale (dₘᵢₙ),
- une étape préalable b) dans laquelle,
- l'engin (1) parcourt la surface (S) du terrain, à une première vitesse (V1), selon une trajectoire (T) déterminée, de sorte que la rampe (2) balaye toute la surface (S), l'utilisateur manoeuvrant, sur toute la trajectoire (T), le système manuel de commande (38, 38a, 38b, 38c) de chaque organe d'inclinaison (3, 3a, 3b, 3c) et/ou le système manuel de commande (38') de l'organe de montée/descente (30), de sorte que la distance (d) entre chaque capteur (6, 6a, 6b, 6c) et la surface (S) ou la végétation est comprise entre la distance maximale (dₘₐₓ) et la distance minimale (dₘᵢₙ),
- l'unité de commande (5) enregistre dans sa mémoire (52), pour des positions échantillonnées de l'engin (1) le long de la trajectoire (T), d'une part, la distance (d) entre chaque capteur (6, 6a, 6b, 6c) et le terrain ou la végétation et, d'autre part, au moins une donnée (α, α8, αa, αb, αc, L103), relative à l'inclinaison de chaque bras (2a, 2b, 2c),
- une étape de pulvérisation c), postérieure à l'étape b), dans laquelle, pendant la pulvérisation,
- l'engin (1) parcourt la surface (S), à une deuxième vitesse (V2) supérieure ou égale à la première vitesse (V1), selon la trajectoire (T) empruntée pendant l'étape préalable b) et
- pour chaque position échantillonnée à l'étape préalable b) et en fonction des données (d, α, α8, αa, αb, αc, L103) stockées dans la mémoire (52), l'unité de commande (5) pilote, de façon anticipée, l'organe de montée/descente (30) et chaque organe d'inclinaison (3, 3a, 3b, 3c), de sorte que la distance (d) entre chaque capteur (6, 6a, 6b, 6c) et le terrain ou la végétation est comprise entre la distance maximale (dₘₐₓ) et la distance minimale (dₘᵢₙ).

6. Procédé de pulvérisation selon la revendication 5, **caractérisé en ce que** lors de l'étape de pulvérisation c), l'unité de commande (5) pilote de manière anticipée chaque organe d'inclinaison (3, 3a, 3b, 3c) de sorte que, pour chaque position échantillonnée à l'étape préalable b), l'inclinaison (α, α8, αa, αb, αc) de chaque bras (2a, 2b, 2c) est semblable à l'inclinaison (α, α8, αa, αb, αc) de chaque bras (2a, 2b, 2c) définie par l'utilisateur lors de l'étape préalable b).

7. Procédé de pulvérisation selon l'une des revendications 5 ou 6, au moyen d'un engin selon la revendication 4, **caractérisé**
**en ce que** lors de l'étape préalable b), l'unité de commande (5) enregistre dans sa mémoire (52), pour des positions échantillonnées de l'engin (1) le long de la trajectoire (T), au moins une grandeur (L103, L130, α8) correspondant à une configuration de l'organe de montée/descente (30) et/ou d'au moins un ou de l'organe d'inclinaison (3, 3a, 3b, 3c) et
**en ce que** lors de l'étape de pulvérisation c), pour chaque position échantillonnée à l'étape préalable b), l'unité de commande (5) pilote automatiquement et de façon anticipée l'organe de montée/descente (30) et/ou au moins un ou l'organe d'inclinaison (3, 3a, 3b, 3c) de sorte que chaque grandeur (L103, L130, α8) est égale aux grandeurs (L103, L130, α8) enregistrées lors de l'étape préalable b).

8. Procédé de pulvérisation selon l'une des revendications 5 à 7, **caractérisé en ce que** lors de l'étape initiale a), l'utilisateur entre dans l'unité de commande (5) la valeur d'une distance optimale (dₒₚₜ), comprise entre la distance minimale (dₘᵢₙ) et la distance maximale (dₘₐₓ), et **en ce que** lors de l'étape de pulvérisation c), l'unité de commande (5) pilote automatiquement et de manière anticipée chaque organe d'inclinaison (3, 3a, 3b, 3c) et l'organe de montée/descente (30) de sorte que, pour chaque position échantillonnée à l'étape préalable b), la distance (d) mesurée par chaque capteur (6, 6a, 6b, 6c) est sensiblement égale à la distance optimale (dₒₚₜ).

9. Procédé de pulvérisation selon l'une des revendications 5 à 8, **caractérisé en ce que**, lors de l'étape initiale a), l'utilisateur entre dans l'unité de commande (5) la valeur d'une distance optimale (dₒₚₜ), comprise entre la distance minimale (dₘᵢₙ) et la distance maximale (dₘₐₓ), et, lors de l'étape préalable b), dès que la distance (d) mesurée par au moins un capteur (6, 6a, 6b, 6c) est inférieure à la distance minimale (dₘᵢₙ), l'unité de commande (5) pilote automatiquement et de façon prioritaire l'organe de montée/descente (30) pour éloigner la rampe (2) de la surface (S) jusqu'à ce que la distance (d) mesurée par chaque capteur (6, 6a, 6b, 6c) soit supérieure ou égale à la distance optimale (dₒₚₜ).

10. Procédé de pulvérisation selon l'une des revendications 5 à 9, **caractérisé en ce que**, lors de l'étape initiale a), l'utilisateur entre dans l'unité de commande (5) la valeur d'une distance optimale (dₒₚₜ), comprise entre la distance minimale (dₘᵢₙ) et la distance maximale (dₘₐₓ), et, lors de l'étape préalable b), l'unité de commande (5) pilote automatiquement l'organe de montée/descente (30) et/ou le ou au moins un organe d'inclinaison (3, 3a, 3b, 3c) de sorte que la distance (d) mesurée par chaque capteur (6, 6a, 6b, 6c) est sensiblement égale à la distance optimale (dₒₚₜ), l'utilisateur manoeuvrant le système manuel de commande (38') de l'organe de montée/descente (30) et/ou le système manuel de commande (38, 38a, 38b, 38c) de chaque organe d'inclinaison (3, 3a, 3b, 3c) pour corriger le pilotage de l'unité de commande (5).

11. Procédé de pulvérisation d'un liquide phytosanitaire sur une végétation plantée sur un terrain au moyen d'un engin (1) selon l'une des revendications 1 à 4, **caractérisé en ce qu'**il comprend:
- une étape initiale a2), dans laquelle, avant la pulvérisation, l'utilisateur entre dans l'unité de commande (5) la valeur d'une distance minimale (dₘᵢₙ) et la valeur d'une distance optimale (dₒₚₜ) supérieure à la distance minimale (dₘᵢₙ),
- une étape préalable b2), postérieure à l'étape initiale a2), dans laquelle,
- l'engin (1) parcourt la surface (S) du terrain, à une première vitesse (V1), selon une trajectoire (T) déterminée, de sorte que la rampe (2) balaye toute la surface (S),
- dès que la distance (d) mesurée par au moins un capteur (6, 6a, 6b, 6c) est inférieure à la distance minimale (dₘᵢₙ), entrée lors de l'étape initiale a2), l'unité de commande (5) pilote l'organe de montée/descente (30), jusqu'à ce que la distance (d) mesurée par ce ou ces capteurs (6, 6a, 6b, 6c) soit égale à la distance optimale (dₒₚₜ),
- l'utilisateur manoeuvre le système manuel de commande (38, 38a, 38b, 38c) de chaque organe d'inclinaison (3, 3a, 3b, 3c) de sorte que la distance (d) mesurée par chaque capteur est globalement égale à la distance optimale (dₒₚₜ),
- à chaque fois que l'utilisateur actionne le système manuel de commande (38, 38a, 38b, 38c) d'un organe d'inclinaison (3, 3a, 3b, 3c), l'unité de commande (5) enregistre dans sa mémoire (52) la position de l'engin (1) le long de la trajectoire (T) et soit une durée de cet actionnement, soit une distance parcourue par l'engin (1) pendant cet actionnement, et, quelques secondes après la fin de cet actionnement, l'unité de commande (5) enregistre dans sa mémoire (52) une première donnée (α, αa, αb, αc, α8, L103) relative à l'inclinaison du bras (2a, 2b, 2c) correspondant au système manuel de commande (38, 38a, 38b, 38c) actionné,
- une étape de pulvérisation c2), postérieure à l'étape préalable b2), dans laquelle, pendant la pulvérisation,
- l'engin (1) parcourt la surface (S) du terrain, à une deuxième vitesse (V2) supérieure ou égale à la première vitesse (V1), selon la trajectoire (T) empruntée pendant l'étape préalable b2) et
- lorsque l'engin (1) atteint une des positions enregistrées lors de l'étape préalable b2), l'unité de commande (5) pilote l'organe d'inclinaison (3, 3a, 3b, 3c), actionné pour cette position par l'utilisateur à l'étape préalable b2), soit pendant une durée égale à la durée d'actionnement correspondante enregistrée lors de l'étape préalable b2), soit jusqu'à ce que l'engin (1) ait parcouru une distance égale à la distance correspondante parcourue pendant l'étape préalable b2), et, quelques secondes après la fin de l'actionnement, l'unité de commande (5) compare une deuxième donnée (α, αa, αb, αc, α8, L103) relative à l'inclinaison du bras (2a, 2b, 2c) correspondant avec la première donnée (α, αa, αb, αc, α8, L103) correspondante enregistrée lors de l'étape préalable b2) et, si la deuxième donnée (α, αa, αb, αc, α8, L103) diffère de plus ou moins 1% de la première donnée (α, αa, αb, αc, α8, L103), l'unité de commande (5) pilote cet organe d'inclinaison (3, 3a, 3b, 3c) dans un sens de réduction de la différence entre la deuxième donnée (α, αa, αb, αc, α8, L103) et la première donnée (α, αa, αb, αc, α8, L103).

12. Procédé de pulvérisation selon l'une des revendications 5 à 11, **caractérisé en ce que** la distance minimale (dₘᵢₙ) est comprise entre 30 cm et 70 cm, de préférence de l'ordre de 50 cm.

13. Procédé de pulvérisation selon l'une des revendications 5 à 12, **caractérisé en ce que** la distance maximale (dₘₐₓ) est comprise entre 70 cm et 150 cm, de préférence de l'ordre de 100 cm.

14. Procédé de pulvérisation selon l'une des revendications 8 à 13, **caractérisé en ce que** la distance optimale (dₒₚₜ) est comprise entre 50 cm et 100 cm, de préférence de l'ordre de 70 cm.

## Patentansprüche

1. Landwirtschaftliche Maschine (1) zum Sprühen einer Pflanzenschutzflüssigkeit auf ein kultiviertes Land, umfassend
- Mittel (10, 11) zum Bewegen der Maschine (1) auf der Oberfläche des Landes,
- ein Sprühgestänge (2) für die Pflanzenschutzflüssigkeit, mindestens einen Arm (2a, 2b, 2c) umfassend,
- für den oder mindestens einen Arm (2a, 2b, 2c) des Gestänges (2) ein Element der Neigung (3, 3a, 3b, 3c) des Arms (2a, 2b, 2c) in Bezug auf ein Chassis (12) der landwirtschaftlichen Maschine (1),
- ein Element zum Anheben/Absenken (30) des Gestänges (2) gemäß einer ersten in Bezug auf das Chassis (12) der Maschine feststehenden Achse (Z1), die vertikal bzw. im Wesentlichen vertikal ist, wenn die Maschine (1) auf der horizontalen ebenen Oberfläche (S) ruht, oder in Bezug auf eine zweite Achse (Zg) in der gleichen Richtung wie die Schwerkraft,
- ein manuelles System (38, 38a, 38b, 38c) zum Steuern des Neigungselements (3, 3a, 3b, 3c) und des Elements (30) zum Anheben/Absenken,
- einen Empfänger (4), der geeignet ist, mit einem Ortsbestimmungssystem zu kommunizieren, und
- eine Steuereinheit (5),
wobei der oder mindestens ein Arm (2a, 2b, 2c) des Gestänges (2) mit mindestens einem Sensor (6, 6a, 6b, 6c) versehen ist, und jeder Sensor (6, 6a, 6b, 6c) einen Abstand (d) zwischen der Oberfläche (S) des Landes und diesem Sensor (6, 6a, 6b, 6c) oder gegebenenfalls zwischen der auf dem Land gepflanzten Vegetation und diesem Sensor (6, 6a, 6b, 6c) misst,
der Innenraum der Maschine (1) derart ausgebildet ist, dass ein Benutzer gleichzeitig die Mittel (10, 11) zum Bewegen der Maschine (1) und das manuelle System (38, 38a, 38b, 38c) zur Steuerung steuern kann, der oder mindestens einer der Arme (2a, 2b, 2c) des Gestänges (2) mit
- einem Element (7, 7a, 7b, 7c, 70, 103) zum Messen einer Größe (α, αa, αb, αc, α8, L103) relativ zur Neigung einer Längsachse (X2, X2a, X2b, X2c) des Arms (2a, 2b, 2c) in einer Ebene (X1-Z1; X2a-Z1) senkrecht zur Fahrtrichtung (Y1) versehen ist und
die Steuereinheit (5)
- mit jedem Sensor (6, 6a, 6b, 6c), dem Empfänger (4) und dem Messelement (7, 7a, 7b, 7c, 70, 103) verbunden ist,
- mit einem Speicher (52) zum Speichern der gelieferten Informationen, wenn der Benutzer das manuelle System zur Steuerung (38, 38a, 38b, 38c) betätigt, von jedem Sensor (6, 6a, 6b, 6c), dem Empfänger (4) und jedem Messelement (7, 7a, 7b, 7c, 70, 103) versehen ist, und
- geeignet ist, jedes Neigungselement (3, 3a, 3b, 3c) und das Element (30) zum Anheben/Absenken in Abhängigkeit von den in dem Speicher (52) gespeicherten Informationen (d, α, α8, αa, αb, αc, L103) zu steuern.

2. Maschine (1) nach Anspruch 1, **dadurch gekennzeichnet, dass** mindestens ein Neigungselement (3, 3a, 3b, 3c) und/oder das Element (30) zum Anheben/Absenken eine hydraulische oder elektrische Kolben-Zylinderanordnung umfasst.

3. Maschine (1) nach einem der der vorhergehenden Ansprüche, **dadurch gekennzeichnet, dass** der oder mindestens einer der Arme (2a, 2b, 2c) des Gestänges (2) mit zwei Sensoren (6, 6a, 6b, 6c) versehen ist.

4. Maschine (1) nach einem der der vorhergehenden Ansprüche, **dadurch gekennzeichnet, dass** das Element (30) zum Anheben/Absenken und/oder das oder mindestens ein Neigungselement (3, 3a, 3b, 3c, 30) mit einem Messsystem (103, 130, 70) einer Größe (L103, L130. α8) entsprechend einer Stellung dieses oder dieser Elemente (3, 3a, 3b, 3c, 30) versehen ist.

5. Verfahren zum Spritzen einer Pflanzenschutzflüssigkeit auf eine in einem Land gepflanzte Vegetation mittels einer Maschine (1) nach einem der vorhergehenden Ansprüche, **dadurch gekennzeichnet, dass** es umfasst:
- einen Ausgangsschritt a), in dem vor dem Spritzen der Benutzer den Wert eines minimalen Abstands (dₘᵢₙ) und den Wert eines maximalen Abstands (dₘₐₓ) größer als der Minimalabstand (dₘᵢₙ) in die Steuereinheit (5) eingibt,
- einen vorangehende Schritt b), in dem
- die Maschine (1) die Oberfläche (S) des Landes bei einer ersten Geschwindigkeit (V1) gemäß einem vorbestimmten Weg (T) durchläuft, derart, dass das Gestänge (2) die gesamte Oberfläche (S) überstreicht, wobei die Bedienperson über den gesamten Weg (T) das manuelle System (38, 38a, 38b, 38c) der Steuerung jedes Neigungselements (3, 3a, 3b, 3c) und/oder das manuelle System (38') zur Steuerung des Elements (30) zum Anheben/Absenken betätigt, derart, dass der Abstand (d) zwischen jedem Sensor (6, 6a, 6b, 6c) und der Oberfläche (S) oder der Vegetation zwischen dem maximalen Abstand (dₘₐₓ) und dem minimalen Abstand (dₘᵢₙ) liegt,
- die Steuereinheit (5) in ihrem Speicher (52) für abgetastete Positionen der Maschine (1) entlang des Wegs (T) einerseits den Abstand (d) zwischen jedem Sensor (6, 6a, 6b, 6c) und dem Land oder der Vegetation und andererseits mindestens eine Größe (α, α8, αa, αb, αc, L103) relativ zur Neigung jedes Arms (2a, 2b, 2c) aufzeichnet,
- einen Sprühschritt c) nachfolgend zu Schritt b), bei dem während des Sprühens
- die Maschine (1) die Oberfläche (S) bei einer zweiten Geschwindigkeit (V2) größer oder gleich der ersten Geschwindigkeit (V1) gemäß dem Weg (T), der bei dem vorherigen Schritt b) gefunden wurde, durchläuft und
- für jede Abtastposition bei dem vorangehenden Schritt b) und abhängig von den in dem Speicher (52) gespeicherten Daten (d, α, αa, αb, αc, L103) die Steuereinheit in voraussehender Weise das Element (30) des Anhebens/Absenkens und jedes Neigungselement (3, 3a, 3b, 3c) so steuert, dass die Entfernung (d) zwischen jedem Sensor (6, 6a, 6b, 6c) und dem Land oder der Vegetation zwischen dem maximalen Abstand (dₘₐₓ) und dem minimalen Abstand (dₘᵢₙ) liegt.

6. Sprühverfahren nach Anspruch 5, **dadurch gekennzeichnet, dass** während des Sprühschritts (c) die Steuereinheit (5) in voraussehender Weise jedes Neigungselement (3, 3a, 3b, 3c) so steuert, dass für jede in dem vorangehenden Schritt b) abgetastete Position die Neigung (α, α8, αa, αb, αc) jedes Arms (2a, 2b, 2c) vergleichbar zur Neigung (α, α8, αa, αb, αc) jedes Arms (2a, 2b, 2c) ist, die von der Bedienperson bei dem vorangehenden Schritt b) definiert wurde.

7. Sprühverfahren nach einem der Ansprüche 5 oder 6 mittels einer Maschine nach Anspruch 4, **dadurch gekennzeichnet,**
**dass** bei dem vorangehenden Schritt b) die Steuereinheit (5) in ihrem Speicher (52) für Abtastpositionen der Maschine (1) entlang des Weges (T) mindestens eine Größe (L103, 130, α8) registriert, die einer Stellung des Elements (30) zum Anheben/Absenken und/oder mindestens eines oder des Neigungselements (3, 3a, 3b, 3c) entspricht, und
**dass** bei dem Sprühschritt c) für jede beim vorangehenden Schritt b) abgetastete Position die Steuereinheit (5) automatisch und in voraussehender Weise das Element (30) zum Anheben/Absenken und/oder mindestens ein oder das Neigungselement (3, 3a, 3b, 3c) so steuert, dass jede Größe (L103, L130, α8) gleich den bei dem vorangehenden Schritt b) registrierten Größen (L103, L130, α8) ist.

8. Sprühverfahren nach einem der Ansprüche 5 bis 7, **dadurch gekennzeichnet, dass** bei dem Anfangsschrift a) die Bedienperson in die Steuereinheit (5) den Wert eines optimalen Abstands (dₒₚₜ), der zwischen dem minimalen Abstand (dₘᵢₙ) und dem maximalen Abstand (dₘₐₓ) liegt, eingibt und dass bei dem Sprühschritt c) die Steuereinheit (5) automatisch und in vorausschauender Weise jedes Neigungselement (3, 3a, 3b, 3c) und das Element (30) zum Anheben/Absenken so steuert, dass für jede im vorangehenden Schritt b) abgetastete Position der von dem Sensor (6, 6a, 6b, 6c) gemessene Abstand (d) im Wesentlichen gleich dem optimalen Abstand (dₒₚₜ) ist.

9. Sprühverfahren nach einem der Ansprüche 5 bis 8, **dadurch gekennzeichnet, dass** bei dem Anfangsschritt a) die Bedienperson den Wert eines optimalen Abstands (dₒₚₜ), der zwischen dem minimalen Abstand (dₘᵢₙ) und dem maximalen Abstand (dₘₐₓ) liegt, in die Steuereinheit (5) eingibt, und sobald bei dem vorangehenden Schritt b) der von mindestens einem Sensor (6, 6a, 6b, 6c) gemessene Abstand (d) kleiner als der minimale Abstand (dₘᵢₙ) ist, die Steuereinheit (5) automatisch und in vorrangiger Weise das Element (30) zum Anheben/Absenken steuert, um das Gestänge (2) von der Oberfläche (S) zu entfernen, bis der von jedem Sensor (6, 6a, 6b, 6c) gemessene Abstand (d) größer als der oder gleich dem optimale(n) Abstand (dₒₚₜ) ist.

10. Sprühverfahren nach einem der Ansprüche 5 bis 9, **dadurch gekennzeichnet, dass** bei dem Anfangsschritt a) die Bedienperson den Wert eines optimalen Abstands (dₒₚₜ), der zwischen dem minimalen Abstand (dₘᵢₙ) und dem maximalen Abstand (dₘₐₓ) liegt, in die Steuereinheit (5) eingibt und bei dem vorangehenden Schritt b) die Steuereinheit (5) automatisch das Element (30) zum Anheben/Absenken und/oder das oder mindestens ein Neigungselement (3, 3a, 3b, 3c) derart steuert, dass der von jedem Sensor (6, 6a, 6b, 6c) gemessene Abstand (d) im Wesentlichen gleich dem optimalen Abstand (dₒₚₜ) ist, wobei die Bedienperson das manuelle System (38') zur Steuerung des Elements (30) zum Anheben/Absenken und/oder das manuelle System zur Steuerung (38, 38a, 38b, 38c) jedes Neigungselements (3, 3a, 3b, 3c) betätigt, um die Steuerung der Steuereinheit (5) zu korrigieren.

11. Sprühverfahren einer Pflanzenschutzflüssigkeit für eine in einem Land gepflanzte Vegetation mittels einer Maschine (1) nach einem der Ansprüche 1 bis 4, **dadurch gekennzeichnet, dass** es umfasst:
- einen Anfangsschritt a2), bei dem vor dem Sprühen die Bedienperson den Wert eines minimalen Abstand (dₘᵢₙ) und den Wert eines optimalen Abstands (dₒₚₜ) größer als der minimale Abstand (dₘᵢₙ) in die Steuereinheit (5) eingibt,
- einen vorangehenden Schritt b2), folgend auf den Anfangsschritt a2), bei dem
- die Maschine (1) die Oberfläche (S) des Landes bei einer ersten Geschwindigkeit (V1) gemäß einem vorbestimmten Weg (T) durchläuft, derart, dass das Gestänge (2) die gesamte Oberfläche (S) überstreicht,
- sobald der von einem Sensor (6, 6a, 6b, 6c) gemessene Abstand (d) kleiner als der minimale Abstand (dₘᵢₙ) ist, der bei dem Anfangsschritt a2) eingegeben wurde, die Steuereinheit (5) das Element (30) zum Anheben/Absenken steuert, bis der von diesem oder diesen Sensoren (6, 6a, 6b, 6c) gemessene Abstand (d) gleich dem optimalen Abstand (dₒₚₜ) ist,
- die Bedienperson das manuelle System (38, 38a, 38b, 38c) zur Steuerung jedes Neigungselements (3, 3a, 3b, 3c) derart betätigt, dass der von jedem Sensor gemessene Abstand (d) im Ganzen gesehen gleich dem optimalen Abstand (dₒₚₜ) ist,
- jedes Mal, wenn die Bedienperson das manuelle System (38, 38a, 38b, 38c) zur Steuerung eines Neigungselements (3, 3a, 3b, 3c) betätigt, die Steuereinheit (5) in ihrem Speicher (52) die Position der Maschine (1) entlang des Wegs (T) registriert und sei es eine Dauer dieser Betätigung, sei es ein von der Maschine (1) während dieser Betätigung durchlaufenen Abstand, und einige Sekunden nach dem Ende dieser Betätigung die Steuereinheit (5) in ihrem Speicher (52) eine erste Größe (α, αa, αb, αc, α8, L103) relativ zur Neigung des Arms (2a, 2b, 2c), die dem betätigten manuellen System (38, 38a, 38b, 38c) zur Steuerung entspricht, registriert,
- einen Sprühschritt c2) folgend auf den vorangehenden Schritt b2), bei dem während des Sprühens
- die Maschine (1) über die Oberfläche (S) des Landes bei einer zweiten Geschwindigkeit (V2) größer oder gleich der ersten Geschwindigkeit (V1) gemäß dem während des vorangehenden Schritts b2) gefundenen Wegs (T) durchläuft und
- wenn die Maschine (1) eine der während des vorangehenden Schritts b2) registrierten Positionen erreicht, die Steuereinheit (5) das Neigungselement (3, 3a, 3b, 3c), das für diese Position von der Bedienperson bei dem vorangehenden Schritt b2) betätigt wurde, sei es während einer Dauer gleich der beim vorangehenden Schritt b2) registrierten entsprechenden Dauer der Betätigung, sei es bis die Maschine (1) eine Entfernung gleich der während des vorangehenden Schritts b2) durchlaufenen entsprechenden Entfernung durchlaufen hat, und einige Sekunden nach dem Ende der Betätigung, die Steuereinheit (5) eine zweite Größe (α, αa, αb, αc, α8, L103) relativ zur entsprechenden Neigung des Arms (2a, 2b, 2c) mit der ersten entsprechenden Größe (α, αa, αb, αc, α8, L103), die bei dem vorangehenden Schritt b2) registriert wurde, vergleicht und wenn die zweite Größe (α, αa, αb, αc, α8, L103) um mehr oder weniger als 1% von der ersten Größe (α, αa, αb, αc, α8, L103) differiert, die Steuereinheit (5) dieses Neigungselement (3, 3a, 3b, 3c) mit dem Zweck der Verringerung der Differenz zwischen der zweiten Größe (α, αa, αb, αc, α8, L103) und der ersten Größe (α, αa, αb, αc, α8, L103) steuert.

12. Sprühverfahren nach einem der Ansprüche 5 bis 11, **dadurch gekennzeichnet, dass** der minimale Abstand (dₘᵢₙ) zwischen 30 cm und 70 cm, vorzugsweise in der Größenordnung von 50 cm liegt.

13. Sprühverfahren nach einem der Ansprüche 5 bis 12, **dadurch gekennzeichnet, dass** der maximale Abstand (dₘₐₓ) zwischen 70 cm und 150 cm, vorzugsweise in der Größenordnung von 100 cm liegt.

14. Sprühverfahren nach einem der Ansprüche 8 bis 13, **dadurch gekennzeichnet, dass** der optimale Abstand (dₒₚₜ) zwischen 50 cm und 100 cm, vorzugsweise in der Größenordnung von 70 cm liegt.

## Claims

1. Agricultural machine (1) for spraying a phytosanitary liquid on cultivated land, comprising
- means (10, 11) for moving the machine (1) over the surface (S) of the land,
- a spray boom (2) for spraying the phytosanitary liquid, comprising at least one arm (2a, 2b, 2c),
- for the arm or for at least one of the arms (2a, 2b, 2c) of the boom (2), a mechanism for inclining (3, 3a, 3b, 3c) the arm (2a, 2b, 2c) in relation to a frame (12) of the agricultural machine (1),
- a mechanism for raising/lowering (30) the boom (2) according to a first axis (Z1) fixed in relation to the frame (12) of the machine and vertical, and even substantially vertical when the machine (1) is on a planar horizontal surface (S) or in relation to a second axis (Zg) of the same direction as the earth's gravity field,
- a manual control system (38, 38a, 38b, 38c) for controlling each mechanism for inclining (3, 3a, 3b, 3c) and for controlling the mechanism for raising/lowering (30),
- a receiver (4) able to communicate with a global positioning system and
- a control unit (5),
the arm or at least one of the arms (2a, 2b, 2c) of the boom (2) being provided with at least one sensor (6, 6a, 6b, 6c), each sensor (6, 6a, 6b, 6c) measuring a distance (d) between the surface (S) of the land and this sensor (6, 6a, 6b, 6c) or, where applicable, between vegetation planted in the land and this sensor (6, 6a, 6b, 6c),
the cabin of the machine (1) is configured in such a way that a user can simultaneously control the means (10, 11) for moving the machine (1) and the manual control system (38, 38a, 38b, 38c),
the arm or at least one of the arms (2a, 2b, 2c) of the boom (2) is provided
- with a measuring element (7, 7a, 7b, 7c, 70, 103) for measuring a data (α, αa, αb, αc, α8, L103) relative to the inclination, in a plane (X1-Z1; X2a-Z1) perpendicular to the forward direction (Y1), of a longitudinal axis (X2, X2a, X2b, X2c) of the arm (2a, 2b, 2c) and
the control unit (5) is
- connected to each sensor (6, 6a, 6b, 6c), to the receiver (4) and to the measuring element (7, 7a, 7b, 7c, 70, 103),
- provided with a memory (52) for storing information provided, while the user controls the manual control system (38, 38a, 38b, 38c), by each sensor (6, 6a, 6b, 6c), by the receiver (4) and by each measuring element (7, 7a, 7b, 7c, 70, 103) and
- able to control each mechanism for inclining (3, 3a, 3b, 3c) and the mechanism for raising/lowering (30) depending on the information (d, α, α8, αa, αb, αc, L103) stored in the memory (52).

2. Machine (1) according to claim 1, **characterised in that** at least one mechanism for inclining (3, 3a, 3b, 3c) and/or the mechanism for raising/lowering (30) comprises a hydraulic or electrical cylinder.

3. Machine (1) according to one of the preceding claims, **characterised in that** the or at least one of the arms (2a, 2b, 2c) of the boom (2) is provided with two sensors (6, 6a, 6b, 6c).

4. Machine (1) according to one of the preceding claims, **characterised in that** the mechanism for raising/lowering (30) and/or the or at least one mechanism for inclining (3, 3a, 3b, 3c) are provided with a system for measuring (103, 130, 70) a magnitude (L103, L130, α8) corresponding to a configuration of this or these mechanisms (3, 3a, 3b, 3c, 30).

5. Method for spraying a phytosanitary liquid on vegetation planted on a land by means of a machine (1) according to one of the preceding claims, **characterised in that** it comprises:
- an initial step a), wherein, before the spraying, the user enters into the control unit (5) the value of a minimum distance (dₘᵢₙ) and the value of a maximum distance (dₘₐₓ) greater than the minimum distance (dₘᵢₙ),
- a prior step b) wherein,
- the machine (1) travels over the surface (S) of the land, at a first speed (V1), according to a determined trajectory (T), in such a way that the boom (2) sweeps the entire surface (S), with the user manoeuvring, over the entire trajectory (T), the manual control system (38, 38a, 38b, 38c) of each mechanism for inclining (3, 3a, 3b, 3c) and/or the manual control system (38') of the mechanism for raising/lowering (30), in such a way that the distance (d) between each sensor (6, 6a, 6b, 6c) and the surface (S) or the vegetation is between the maximum distance (dₘₐₓ) and the minimum distance (dₘᵢₙ),
- the control unit (5) records in its memory (52), for sampled positions of the machine (1) along the trajectory (T), on the one hand, the distance (d) between each sensor (6, 6a, 6b, 6c) and the land or the vegetation and, on the other hand, at least one data (α, α8, αa, αb, αc, L103), relative to the inclination of each arm (2a, 2b, 2c),
- a step of spraying c), after the step b), wherein, during the spraying,
- the machine (1) travels over the surface (S), at a second speed (V2) greater than or equal to the first speed (V1), according to the trajectory (T) travelled during the prior step b) and
- for each sampled position in prior step b) and according to the data (d, α, α8, αa, αb, αc, L103) stored in the memory (52), the control unit (5) controls, ahead of time, the mechanism for raising/lowering (30) and each mechanism for inclining (3, 3a, 3b, 3c), in such a way that the distance (d) between each sensor (6, 6a, 6b, 6c) and the land or the vegetation is between the maximum distance (dₘₐₓ) and the minimum distance (dₘᵢₙ).

6. Method of spraying according to claim 5, **characterised in that** during the step of spraying c), the control unit (5) controls ahead of time each mechanism for inclining (3, 3a, 3b, 3c) in such a way that, for each sampled position in prior step b), the inclination (α, α8, αa, αb, αc) of each arm (2a, 2b, 2c) is similar to the inclination (α, α8, αa, αb, αc) of each arm (2a, 2b, 2c) defined by the user during the prior step b).

7. Method of spraying according to one of claims 5 or 6, by means of a machine according to claim 4, **characterised**
**in that** during the prior step b), the control unit (5) records in its memory (52), for sampled positions of the machine (1) along the trajectory (T), at least one magnitude (L103, L130, α8) corresponding to a configuration of the mechanism for raising/lowering (30) and/or of at least one or of the mechanism for inclining (3, 3a, 3b, 3c) and
**in that** during the step of spraying c), for each sampled position in prior step b), the control unit (5) automatically controls and ahead of time the mechanism for raising/lowering (30) and/or at least one or the mechanism for inclining (3, 3a, 3b, 3c) in such a way that each magnitude (L103, L130, α8) is equal to the magnitudes (L103, L130, α8) recorded during the prior step b).

8. Method of spraying according to one of claims 5 to 7, **characterised in that** during the initial step a), the user enters into the control unit (5) the value of an optimum distance (dₒₚₜ), between the minimum distance (dₘᵢₙ) and the maximum distance (dₘₐₓ), and **in that** during the step of spraying c), the control unit (5) automatically controls and ahead of time each mechanism for inclining (3, 3a, 3b, 3c) and the mechanism for raising/lowering (30) in such a way that, for each sampled position in prior step b), the distance (d) measured by each sensor (6, 6a, 6b, 6c) is substantially equal to the optimum distance (dₒₚₜ).

9. Method of spraying according to one of claims 5 to 8, **characterised in that**, during the initial step a), the user enters into the control unit (5) the value of an optimum distance (dₒₚₜ), between the minimum distance (dₘᵢₙ) and the maximum distance (dₘₐₓ), and, during the prior step b), as soon as the distance (d) measured by at least one sensor (6, 6a, 6b, 6c) is less than the minimum distance (dₘᵢₙ), the control unit (5) automatically controls and with priority the mechanism for raising/lowering (30) in order to separate the boom (2) from the surface (S) until the distance (d) measured by each sensor (6, 6a, 6b, 6c) is greater than or equal to the optimum distance (dₒₚₜ).

10. Method of spraying according to one of claims 5 to 9, **characterised in that**, during the initial step a), the user enters into the control unit (5) the value of an optimum distance (dₒₚₜ), between the minimum distance (dₘᵢₙ) and the maximum distance (dₘₐₓ), and, during the prior step b), the control unit (5) automatically controls the mechanism for raising/lowering (30) and/or the or at least one mechanism for inclining (3, 3a, 3b, 3c) in such a way that the distance (d) measured by each sensor (6, 6a, 6b, 6c) is substantially equal to the optimum distance (dₒₚₜ), the user manoeuvring the manual control system (38') of the mechanism for raising/lowering (30) and/or the manual control system (38, 38a, 38b, 38c) of each mechanism for inclining (3, 3a, 3b, 3c) in order to correct the controlling of the control unit (5).

11. Method for spraying a phytosanitary liquid on vegetation planted on a land by means of a machine (1) according to one of claims 1 to 4, **characterised in that** it comprises:
- an initial step a2), wherein, before the spraying, the user enters into the control unit (5) the value of a minimum distance (dₘᵢₙ) and the value of an optimum distance (dₒₚₜ) greater than the minimum distance (dₘᵢₙ),
- a prior step b2), after the initial step a2), wherein,
- the machine (1) travels over the surface (S) of the land, at a first speed (V1), according to a determined trajectory (T), in such a way that the boom (2) sweeps the entire surface (S),
- as soon as the distance (d) measured by at least one sensor (6, 6a, 6b, 6c) is less than the minimum distance (dₘᵢₙ), entered during the initial step a2), the control unit (5) controls the mechanism for raising/lowering (30), until the distance (d) measured by this or these sensors (6, 6a, 6b, 6c) is equal to the optimum distance (dₒₚₜ),
- the user manoeuvres the manual control system (38, 38a, 38b, 38c) of each mechanism for inclining (3, 3a, 3b, 3c) in such a way that the distance (d) measured by each sensor is globally equal to the optimum distance (dₒₚₜ),
- at each time that the user actuates the manual control system (38, 38a, 38b, 38c) of a mechanism for inclining (3, 3a, 3b, 3c), the control unit (5) records in its memory (52) the position of the machine (1) along the trajectory (T) and either a duration of this actuation, or a distance travelled by the machine (1) during this actuation, and, a few seconds after the end of this actuation, the control unit (5) records in its memory (52) a first data (α, αa, αb, αc, α8, L103) relative to the inclination of the arm (2a, 2b, 2c) corresponding to the manual control system (38, 38a, 38b, 38c) actuated,
- a step of spraying c2), after the prior step b2), wherein, during the spraying,
- the machine (1) travels over the surface (S) of the land, at a second speed (V2) greater than or equal to the first speed (V1), according to the trajectory (T) travelled during the prior step b2) and
- when the machine (1) reaches one of the positions recorded during the prior step b2), the control unit (5) controls the mechanism for inclining (3, 3a, 3b, 3c), actuated for this position by the user in prior step b2), either during a duration equal to the duration of the corresponding actuation recorded during the prior step b2), or until the machine (1) has travelled a distance equal to the corresponding distance travelled during the prior step b2), and, a few seconds after the end of the actuation, the control unit (5) compares a second data (α, αa, αb, αc, α8, L103) relative to the inclination of the corresponding arm (2a, 2b, 2c) with the first corresponding data (α, αa, αb, αc, α8, L103) recorded during the prior step b2) and, if the second data (α, αa, αb, αc, α8, L103) differs by plus or minus 1% from the first data (α, αa, αb, αc, α8, L103), the control unit (5) controls this mechanism for inclining (3, 3a, 3b, 3c) in a direction for reducing the difference between the second data (α, αa, αb, αc, α8, L103) and the first data (α, αa, αb, αc, α8, L103).

12. Method of spraying according to one of claims 5 to 11, **characterised in that** the minimum distance (dₘᵢₙ) is between 30 cm and 70 cm, preferably of a magnitude of 50 cm.

13. Method of spraying according to one of claims 5 to 12, **characterised in that** the maximum distance (dₘₐₓ) is between 70 cm and 150 cm, preferably of a magnitude of 100 cm.

14. Method of spraying according to one of claims 8 to 13, **characterised in that** the optimum distance (dₒₚₜ) is between 50 cm and 100 cm, preferably of a magnitude of 70 cm.
